# EUROPÄISCHE PATENTANMELDUNG

(11) **EP 1 914 114 A1**
(43) Veröffentlichungstag der Anmeldung: **23.04.2008**
(21) Anmeldenummer: 07117271.2
(22) Anmeldetag: 26.09.2007
(51) Int. Cl.: B60P 1/42

(54) **Überladewagen**

(30) Priorität: 21.10.2006 DE 102006049779
(71) Anmelder: Deere & Company, Moline, IL 61265-8098 (US)
(72) Erfinder: Hahn, Klaus, 68199 Mannheim (DE)
(74) Vertreter: Bradl, Joachim

(57) **Zusammenfassung**

Die Erfindung betrifft einen von einem Fahrzeug (16) gezogenen Überladewagen (10). Der Überladewagen (10) weist einen Behälter (12) und einen Entladeförderer (14) auf. Der Behälter (12) dient zur Aufnahme von Schüttgut. Der Entladeförderer (14) dient zum Entladen des in dem Behälter (12) befindlichen Schüttguts. Um einen einfachen technischen Aufbau und einen variablen Antrieb des Entladeförderers (14) zu ermöglichen wird vorgeschlagen, dass dem Entladeförderer (14) ein elektrischer Antrieb (36) zugeordnet ist, durch welchen der Entladeförderer (14) ausschließlich angetrieben wird.

## Beschreibung

Die Erfindung betrifft einen von einem Fahrzeug gezogenen Überladewagen. Der Überladewagen weist einen Behälter und einen Entladeförderer auf. Der Behälter dient zur Aufnahme von Schüttgut, insbesondere von Biomasse. Der Entladeförderer dient zum Entladen des in dem Behälter befindlichen Schüttguts.

Solche Überladewagen werden in der Landwirtschaft zur Förderung hochwertiger Schüttgüter, wie beispielsweise Getreide oder Mineraldünger, insbesondere in der Getreidewirtschaft verwendet.

Die klassische Erntezeit für Mähdruschfrüchte hat sich von fast zwei Monaten auf nur noch wenige Wochen reduziert. Dies konnte mit leistungsgesteigerten Erntemaschinen realisiert werden, die dadurch aber auch kostenintensiver wurden. Somit ist jede Minute Stillstand in dem Ernteablauf mit hohen finanziellen Einbußen verbunden. Es werden entsprechend große Anstrengungen unternommen, die Erntezeit weiter abzukürzen bzw. voll zu nutzen.

Um Stillstandszeiten der Mähdrescher zu vermeiden, werden deren Vorratsbehälter während des Dreschens in einen parallel mitfahrenden ackertauglichen traktorgezogenen Spezialanhänger, nämlich so genannte Überladewagen, entleert. Diese Überladewagen fahren dann zum Feldrand und entleeren ihrerseits das Getreide in auf der Strasse bereitstehende großvolumige, nicht ackertaugliche Transportfahrzeuge. Dabei werden Umladezeiten von etwa 2 Minuten für einen Behälterinhalt von 20 m³ erreicht.

Die Überladewagen weisen üblicherweise einen im Wesentlichen prismatisch ausgebildeten Behälter bzw. Aufnahmebehälter und eine ein- oder zweiteilige Entleerungseinrichtung bzw. Entladeförderer auf, welche beide auf einem ein- oder mehrachsigen Fahrgestell aufgebaut sind. Das Fahrgestell weist einen Rahmen auf, an welchem eine durchgehende Achse mit einem rechten und einem linken Laufrad auf den Rahmenaußenseiten befestigt ist und welcher eine Deichsel aufweist, die auf das Anhängen an eine Zugmaschine, meist einen Traktor ausgelegt ist. Die Laufräder sind entsprechend auf das Befahren von unbefestigtem Untergrund angepasst. Die Bodenwand des Behälters läuft dabei über die gesamte Länge des Aufnahmebehälters trichterförmig auf die Fahrzeuglängsachse zu. Bei einem zweiteilig ausgebildeten Entladeförderer ist ein erster Teil als eine innere Förderschnecke (Zuführungsschnecke) innerhalb und im unteren Bereich des Aufnahmebehälters angeordnet und entsprechend der Fahrzeuglängsachse ausgerichtet. Im Bereich der vorderen Stirnwand des Aufnahmebehälters ist die innere Förderschnecke mit einer äußeren Förderschnecke (Austragschnecke) gekoppelt, die einen zweiten Teil des zweigeteilten Entladeförderers bildet. Die äußere Förderschnecke ist in einer rohrförmigen Einhausung bzw. in einem Förderrohr angeordnet und weist schräg nach oben und ein freies Ende auf. Die Länge und der Neigungswinkel des zweiten Teils des Entladeförderers ist entsprechend auf das Überladen auf ein großvolumiges Transportfahrzeug ausgelegt. Durch eine Drehbewegung mit konstanter oder variabler Umdrehungszahl, sowohl der inneren als auch der äußeren Förderschnecke wird im Aufnahmebehälter befindliches Getreide bzw. Schüttgut in Richtung der sich drehenden Förderschnecke, bedingt durch deren Durchmesser und Anstellwinkel der Schnecke gefördert.

Überladewagen mit hoher Förderleistung besitzen auf Grund des großen Schneckendurchmessers ein entsprechend hohes Eigengewicht. Das Eigengewicht und das Gewicht des aufzunehmenden Getreides bilden dabei Grenzen, innerhalb derer ein sinnvoller Einsatz auf dem Feld noch möglich ist. Je größer und schwerer derartige Überladewagen ausgeführt werden, desto schwieriger lassen sie sich über Felder transportieren, besonders im beladenen Zustand. Deshalb lassen sich herkömmliche Überladewagen in ihrer Leistung kaum noch steigern. Die Förderleistung ist aber nicht nur durch den Schneckendurchmesser und damit dem Gewicht der Förderschnecke begrenzt, sondern auch durch deren Drehzahl. Eine Erhöhung der Drehzahl der Förderschnecke zieht eine höhere Belastung des zu fördernden Getreides nach sich und kann bis zur Zerstörung von Getreidekörnern an der Schnecke führen. Damit sind qualitätsbedingte Ernteverluste vorhersehbar. Zudem ist der konstruktive und fertigungstechnische Aufwand entsprechend hoch, um einen vibrationsarmen Lauf der schweren Förderschnecken zu gewährleisten.

Die Überladewagen werden nicht nur in der Ernte eingesetzt, sondern auch bei Aussaat und Düngung zur Befüllung der entsprechenden Maschinen, welche alle einen recht kleinen Vorratsbehälter aufweisen. Bei der Befüllung mit Düngemittel und Saatgut kommt es noch mehr auf ein beschädigungsfreies Entleeren des Umladewagens an.

Herkömmliche, von einem Zugfahrzeug bzw. Traktor gezogene Überladewagen werden rein mechanisch angetrieben. Hierbei erfolgt der mechanische Antrieb des Entladeförderers über die Zapfwelle des Traktors. Dies bedingt eine vergleichsweise komplizierte Konstruktion. Es sind große Untersetzungen notwendig, welche insbesondere bei den relativ häufig auftretenden Drehmomentstößen besonders kritisch sind und in der Regel Überlastkupplungen erfordern. Die Drehzahl der Förderschnecke des Entladeförderers steht in einem festen Verhältnis mit der Zapfwellendrehzahl des Traktors und kann nur eingeschränkt auf die jeweiligen Gegebenheiten angepasst werden. Um die Gelenkwelle zwischen Zapfwelle und mechanischem Antrieb des Überladewagens nicht zu überlasten, muss der Antrieb bei Kurvenfahrt unter Umständen ausgeschaltet werden. Dies führt zu großen Lasten beim Wiederanfahren des Entladeförderers, was das Wiederanfahren unter Umständen sogar unmöglich macht.

Die der Erfindung zugrunde liegende Aufgabe wird darin gesehen, einen Überladewagen der eingangs genannten Art derart auszubilden, dass die eingangs genannten Probleme überwunden werden. Insbesondere soll bei einem einfachen technischen Aufbau ein variabler Antrieb des Entladeförderers möglich sein und zwar sowohl im stationären Betrieb als auch im Beladungs-und Transportbetrieb.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist ein Überladewagen der eingangs genannten Art dadurch gekennzeichnet, dass dem Entladeförderer ein elektrischer Antrieb zugeordnet ist, durch welchen der Entladeförderer ausschließlich angetrieben wird.

Dabei kann der Überladewagen von einem Fahrzeug gezogen werden, z.B. von einem Ackerschlepper. Grundsätzlich ist es auch denkbar, jedoch nicht bevorzugt, den Überladewagen als Selbstfahrer auszubilden, der hierbei nahezu ausschließlich die Funktionen eines Überladewagens ausübt. Bei einem selbstfahrenden Überladewagen könnten auch für den Fahrantrieb Elektromotoren (z. B. Einzelradantriebsmotoren) verwendet werden.

Als elektrische Energiequelle kommt beispielsweise ein auf dem Zugfahrzeug oder dem Selbstfahrer montierter, durch eine Verbrennungsmaschine antreibbarer Generator oder elektrische Energiespeicher (Batterie, Supercap, Schwungradspeicher etc.), die auf dem Zugfahrzeug oder dem Überladewagen montiert sein können, oder ein stationäres elektrisches Netz mit Steckdose in Betracht. Es ist ein stationärer Betrieb ohne Zugfahrzeug an einer Steckdose möglich.

Der erfindungsgemäße Überladewagen hat eine Reihe von Vorteilen: Durch den Wegfall eines mechanischen Antriebs sind nunmehr keine Gelenkwellen mit ihren oben geschilderten Nachteilen (Kraftübertragung bei Kurvenfahrt) erforderlich.

Durch den Wegfall einer Gelenkwelle lässt sich der Kuppelvorgang zwischen Zugfahrzeug und Überladewagen beschleunigen und automatisieren. Des Weiteren ergibt sich durch den Wegfall der üblichen Antriebswelle und des Verteilergetriebes ein einfacher, raumsparender Aufbau, bei dem die Komponenten relativ tief angeordnet werden können. Beispielsweise kann hierdurch der Schwerpunkt des Überladewagens tiefer als bisher üblich liegen, es können größere Behälter verwendet werden und/oder es kann eine niedrigere Durchfahrtshöhe erreicht werden. Auch ist keine Durchführung für die Antriebswelle durch eine Behälterwand oder eine außenliegende Förderschnecke mit einer entsprechenden Öffnung zum Behälter erforderlich, was in konstruktiver Hinsicht zu einer weiteren Vereinfachung führt.

Ganz besonders vorteilhaft ist die Tatsache, dass der Antrieb des Entladeförderers mechanisch von dem Verbrennungsmotor des Fahrzeugs entkoppelt ist. Hierdurch kann der elektrische Antrieb stufenlos und unabhängig von der aktuell vorliegenden Drehzahl des Verbrennungsmotors angetrieben werden. Zum Betreiben des Entladeförderers reicht üblicherweise eine Leistung aus, die bei der Leerlaufdrehzahl des Verbrennungsmotors des Fahrzeugs erzeugt wird. Der Entladevorgang wird üblicherweise im Stand des Gespanns bestehend aus Fahrzeug und Überladewagen ausgeführt. Dementsprechend kann zur Beschleunigung des Entladevorgangs bei dem erfindungsgemäßen Überladewagen die Drehzahl des Verbrennungsmotors gegebenenfalls leicht erhöht werden. Es ist allerdings nicht mehr erforderlich, die Drehzahl des Verbrennungsmotors durch Gas geben wesentlich zu erhöhen, was unnötigen Lärm verursacht hat und einen erhöhten Kraftstoffverbrauch zur Folge hatte.

Der elektrische Antrieb kann also in der Regel unabhängig von der aktuell vorliegenden Drehzahl des Verbrennungsmotors mit optimierter Effizienz betrieben werden. Der elektrische Antrieb lässt sich weitgehend in den Entladeförderer integrieren, was eine kompakte Bauweise mit modular ausgebildeten Komponenten ermöglicht. Wegen der erheblichen Reduzierung von Wellen und Gelenken ergeben sich bei der erfindungsgemäßen Ausbildung viel weniger Schmierstellen als bei bekannten Überladewagen, so dass sich der Wartungsaufwand erheblich reduziert. Der elektrische Antrieb ist in jeder Betriebsbedingung stufenlos einstellbar, er lässt sich mit einer vorgebbaren Drehzahl betreiben, und die Drehzahl ist umkehrbar. Dies gilt insbesondere dann, wenn die elektrische Energieversorgung der Elektromotoren durch ansteuerbare Frequenzumrichter erfolgt. Wenn mehrere elektrische Antriebe vorgesehen sind, lässt sich jeder Antrieb unabhängig von den anderen Antrieben ein- und abschalten. Erfindungsgemäß ausgebildete Überladewagen ermöglichen beim Betrieb mit Energiespeichern ein stark emissionsvermindertes (Abgase und Schall) Fahren.

Der Entladeförderer könnten im einfachsten Fall ein Förderrohr und eine Förderschnecke aufweisen. Hierdurch ist ein einteiliger Entladeförderer gebildet. Es könnte jedoch, wie oben erwähnt, ein zweiteiliger Entladeförderer vorgesehen sein. Ein solcher Entladeförderer könnte eine innere Förderschnecke aufweisen, welche innerhalb und im unteren Bereich des Aufnahmebehälters angeordnet und entsprechend der Fahrzeuglängsachse ausgerichtet ist. Im Bereich der vorderen Stirnwand des Aufnahmebehälters könnte die innere Förderschnecke mit einer äußeren Förderschnecke gekoppelt sein. Die innere Förderschnecke könnte von einem ersten Elektromotor, die äußere Förderschnecke könnte von einem weiteren Elektromotor angetrieben werden. Es ist auch denkbar, beide Förderschnecken mit lediglich einem einzelnen Elektromotor und einem gegebenenfalls vorgesehenen Zwischengetriebe anzutreiben.

Als elektrischer Antrieb wird zweckmäßiger Weise ein Asynchronmotor oder einen Synchronmotor verwendet. Diese Motoren lassen sich mit Hilfe von Frequenzumrichtern speisen. Asynchronmotoren erfordern hingegen einen geringeren technischen und finanziellen Aufwand. Sie haben allerdings eine geringere Leistungsdichte und erfordern daher einen größeren Bauraum als Synchronmotoren.

Gemäß einer ganz besonders bevorzugten Ausführungsform ist der elektrische Antrieb stufenlos betreibbar ausgebildet. Hierdurch kann in vorteilhafter Weise z.B. ein sanfter Anlauf des Entladeförderers bzw. der Förderschnecke realisiert werden. Auch ist durch einen stufenlos ansteuerbaren elektrischen Antrieb eine Regelung der Drehzahl der Förderschnecke derart möglich, dass beispielsweise ein möglichst hoher bzw. maximaler Entladedurchsatz erzielbar ist.

Gemäß einer bevorzugten Ausführungsform ist der Entladeförderer reversierbar betreibbar. Dies ist mit einem elektrischen Antrieb in konstruktiver Hinsicht einfach zu realisieren. Ein reversierter Betrieb des Entladeförderers könnte beispielsweise zu Reinigungszwecken des Entladeförderers bzw. der Förderschnecke vorgesehen sein.

Besonders bevorzugt ist eine Messeinrichtung zum Messen des von dem elektrischen Antrieb verbrauchten elektrischen Stroms vorgesehen. Auf Grund der gemessenen Stromstärke kann das Drehmoment ermittelt werden, mit welchem der Entladeförderer aktuell angetrieben wird. Insoweit kann beispielsweise eine Überlastsicherung des elektrischen Antriebs auf einfache und kostengünstige Weise realisiert werden. So ist hierzu lediglich das aktuell vorliegende Drehmoment, mit welchem der Entladeförderer aktuell angetrieben wird, mit einem vorgebbaren maximalen Drehmoment zu vergleichen und derart zu regeln, dass das aktuell vorliegende Drehmoment stets unter dem vorgebbaren maximalen Drehmoment liegt. Insoweit wird auch das Erntegut bzw. das Schüttgut bei dem Entladevorgang - wie oben angedeutet - nicht beschädigt.

Gemäß einer ganz besonders bevorzugten Ausführungsform der vorliegenden Erfindung wird der elektrische Antrieb derart angesteuert und/oder geregelt, dass ein maximierter oder möglichst hoher Entladedurchsatz bei dem Entladevorgang des Überladewagens erzielbar ist. Ein maximierter Entladedurchsatz könnte dann vorliegen, wenn beispielsweise der Entladeförderer mit einem Drehmoment bzw. einer Leistung betrieben wird, welche(s) unter einem vorgegebenen maximalen Drehmoment bzw. einer vorgegebenen maximalen Leistung liegt. Dementsprechend kann ein Entladen des Ernteguts in vorteilhafter Weise in verkürzter Zeit erfolgen, so dass nur eine geringe oder im Idealfall keine Stillstandszeit des Erntefahrzeugs vorliegt.

Eine alternative oder zusätzliche Ansteuerungs- bzw. Regelungsstrategie des elektrischen Antriebs des Überladewagens könnte vorsehen, dass bei der Erzeugung der elektrischen Energie und/oder beim Betreiben des elektrischen Antriebs ein maximierter bzw. möglichst hoher Wirkungsgrad erzielbar ist. Auf Grund des vorliegenden Konzepts des erfindungsgemäßen Überladewagens liegt in vorteilhafter Weise keine starre bzw. mechanische Kopplung zwischen einem Dieselmotor eines Traktors, der Zapfwellendrehzahl und somit einem mechanischen Antrieb des Entladeförderers vor. Vielmehr kann der Dieselmotor des Traktors bei einem Betriebspunkt betrieben werden, welcher eine geringere Drehzahl bei einer höheren Last aufweist, nämlich beispielsweise der Last des von dem Dieselmotor anzutreibenden Generators zum Erzeugen des elektrischen Stroms für den elektrischen Antrieb. Insoweit kann in vorteilhafter Weise der Kraftstoffverbrauch reduziert werden. Die Lärmbelastung für die nähere Umgebung, welche durch eine hohe Drehzahl des Dieselmotors bei dem Entladevorgang mit einem herkömmlichen Überladewagen verursacht ist, kann verringert werden.

Zur Drehzahl- und Drehmomentwandlung enthält der elektrische Antrieb gemäß einer bevorzugten Ausgestaltung der Erfindung einen Elektromotor mit nachgeordnetem Getriebe, insbesondere einem Planetengetriebe oder Untersetzungsgetriebe. Das Getriebe kann in eine Baueinheit bestehend aus Elektromotor, Getriebe und Entladeförderer integriert werden. Das Getriebe ist vorzugsweise als Untersetzungsgetriebe ausgebildet, so dass sich der Elektromotor in einem günstigen Drehzahlbereich betreiben lässt.

Vorzugsweise ist wenigstens ein Frequenzumrichter vorgesehen. Insbesondere kann eine Gleichrichtereinheit den 3-Phasen-Wechselstrom eines Netzes gleichrichten, während eine der Gleichrichtereinheit nachgeordnete Wechselrichtereinheit eine Frequenzwandlung für Asynchronmotoren oder Synchronmotoren vornimmt. Während die Stromversorgung beispielsweise durch einen auf dem Zugfahrzeug angeordneten Generator erfolgt, befinden sich die Wechselrichtereinheit auf dem Zugfahrzeug oder auf dem Überladewagen. Bei Verwendung eines stationären Wechselstromnetzes kann die Gleichrichtereinheit entweder auf dem Überladewagen selbst oder ebenfalls stationär angeordnet werden. Somit könnte der Überladewagen und/oder ein den Überladewagen ziehendes Fahrzeug wenigstens eine Gleichrichtereinheit und/oder eine Wechselrichtereinheit aufweisen.

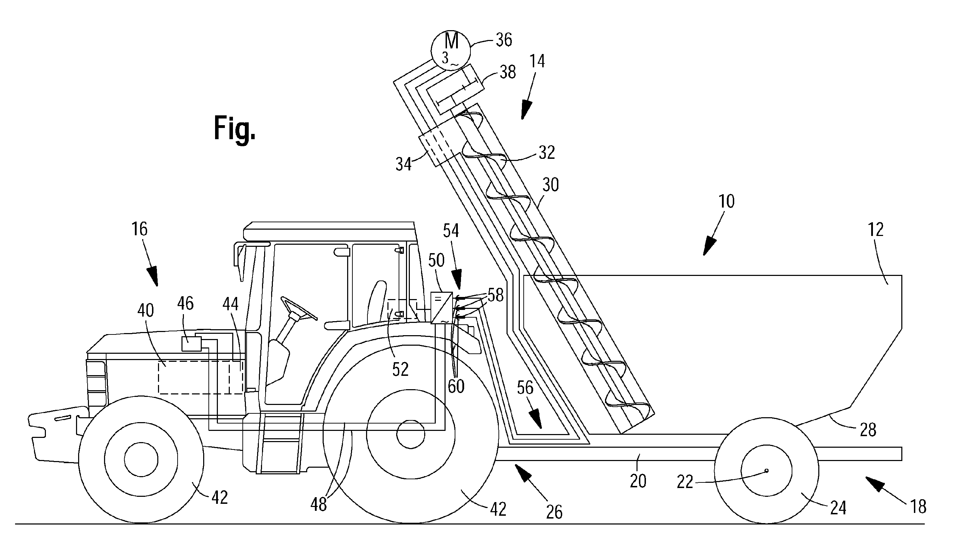

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung des bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt in der einzigen
- Fig.: in einer schematischen Darstellung ein Ausführungsbeispiel eines erfindungsgemäßen Überladewagens, welcher von einem Fahrzeug gezogenen wird.

In der einzigen Fig. ist ein Überladewagen 10 gezeigt, welcher einen Behälter 12 zur Aufnahme von Schüttgut aufweist. Weiterhin weist der Überladewagen 10 einen Entladeförderer 14 zum Entladen des in dem Behälter befindlichen (nicht gezeigten) Schüttguts auf. Der Überladewagen 10 kann an einen Traktor 16 angekoppelt und von diesem gezogen werden.

Der in der einzigen Fig. gezeigte Überladewagen 10 weist einen im Wesentlichen prismatisch ausgebildeten Behälter 12 auf. Der Behälter 12 und der Entladeförderer 14 sind auf einem einachsigen Fahrgestell 18 aufgebaut. Das Fahrgestell 18 weist einen Rahmen 20 auf, an welchem eine durchgehende Achse 22 mit einem rechten und einem linken Laufrad vorgesehen ist, wobei lediglich eines der zwei Räder 24 gezeigt ist. Der Rahmen 20 weist eine lediglich schematisch angedeutete Deichsel 26 auf, die auf das Anhängen an den Traktor 16 ausgelegt ist. Lediglich schematisch ist angedeutet, dass die Bodenwand 28 des Behälters 12 dabei über die gesamte Länge des Aufnahmebehälters 12 trichterförmig auf die Fahrzeuglängsachse zuläuft. Der Entladeförderer 14 ist einteilig ausgebildet und weist eine in einem Förderrohr 30 um ihre Längsachse drehbar angeordnete Förderschnecke 32 auf. Das Förderrohr 30 weist ein freies Ende 34 auf, an welchem das in dem Behälter 12 über die Förderschnecke 32 nach oben geförderte Erntegut ausgeworfen werden kann. Die Länge und der Neigungswinkel des Förderrohrs 30 ist entsprechend auf das Überladen auf ein großvolumiges Transportfahrzeug ausgelegt. Der Neigungswinkel des Förderrohrs 30 gegenüber der Vertikalen beziehungsweise Horizontalen kann variabel eingestellt werden. Durch eine Drehbewegung mit konstanter oder variabler Umdrehungszahl der Förderschnecke 32 wird im Aufnahmebehälter 12 befindliches Getreide bzw. Biomasse mit der sich drehenden Förderschnecke 32 zu dem freien Ende 34 gefördert.

In erfindungsgemäßer Weise ist dem Entladeförderer 14 ein elektrischer Antrieb 36 zugeordnet. Mit dem elektrischen Antrieb 36 wird der Entladeförderer 14 und dementsprechend die Förderschnecke 32 ausschließlich angetrieben.

Der elektrische Antrieb 36 weist einen Asynchronmotor auf und ist stufenlos betreibbar ausgebildet. Der elektrische Antrieb 36 kann in Abhängigkeit von dessen Ansteuerung in zwei entgegengesetzte Drehrichtungen angetrieben werden. Eine der Drehrichtungen ermöglicht das Entleeren des Behälters 12. Die entgegengesetzte Drehrichtung kann zu Reinigungszwecken genutzt werden. Zwischen dem elektrischen Antrieb 36 und der Förderschnecke 32 ist ein Untersetzungsgetriebe 38 vorgesehen, mit welchem die relativ hohe Drehzahl des elektrischen Antriebs 36 auf eine geringere Drehzahl der Förderschnecke 32 reduzierbar ist. Der elektrische Antrieb 36, das Untersetzungsgetriebe 38 sowie das Förderrohr 30 samt Förderschnecke 32 können als vormontierte Einheit bzw. Baugruppe an dem Überladewagen 10 montiert werden. In dem Ausführungsbeispiel gemäß der einzigen Figur ist der elektrische Antrieb 36 an dem freien Ende 34 des Förderrohrs 30 angeordnet. Der elektrische Antrieb 36 nebst Untersetzungsgetriebe 38 könnte jedoch auch in einem unteren Bereich des Überladewagens 10 angeordnet sein.

Der Traktor 16 weist einen Verbrennungsmotor 40 auf, mit welchem die Räder 42 des Traktors antreibbar sind. Ebenfalls von dem Verbrennungsmotor 40 angetrieben ist ein Generator 44 vorgesehen, welcher elektrischen Strom, im Konkreten Drehstrom, erzeugt. Der von dem Generator 44 erzeugte Drehstrom wird einer Gleichrichtereinheit 46 zugeführt, welche den Drehstrom in Gleichstrom wandelt und in einen Gleichstromzwischenkreis 48 speist.

An den Gleichstromzwischenkreis 48 ist ein Umrichter 50 bzw. eine Wechselrichtereinheit angeschlossen, mit welchem der Gleichstrom des Gleichstromzwischenkreises 48 in Drehstrom vorgebbarer Frequenz umwandelbar ist. Mit dem Umrichter 50 kann auch die Höhe der an den elektrischen Antrieb 36 abgegebenen Stromstärke bzw. auch die Drehrichtung des elektrischen Antriebs 36 eingestellt werden. Hierzu ist eine Steuereinrichtung 52 vorgesehen, mit welcher der Umrichter 50 ansteuerbar ist. Der Umrichter 50 weist eine nicht gezeigte Messeinrichtung auf, mit welcher die Höhe des an den elektrischen Antrieb 36 abgegebenen elektrischen Stroms gemessen werden kann. Das Messergebnis wird der Steuereinrichtung 52 zugeleitet. Auf Grund der gemessenen Stromstärke ist das Drehmoment ermittelbar, mit welchem der Entladeförderer 14 aktuell angetrieben wird. Daher kann die Steuereinheit 52 dem Umrichter 50 und somit den elektrischen Antrieb 36 derart betreiben, dass einerseits der Entladeförderer 14 einen maximierten Entladedurchsatz erzielen kann. Andererseits kann der elektrische Antrieb 36 sowie die Komponenten des Entladeförderers 14 vor einer Überlastung geschützt werden, falls es beim Entladevorgang des Überladewagens 10 zu Drehmomentspitzen oder Verstopfungen kommen sollte, indem beispielsweise dem elektrischen Antrieb 36 weniger oder kein Strom mehr zur Verfügung gestellt wird oder indem die Förderschnecke 32 reversiert wird, um die Verstopfung zu beheben.

Die schematisch angedeutete Steckverbindung 54 kann die Leitungen 56 zwischen dem Stecker 58 des Überladewagens 10 und dem elektrischen Antrieb 36 und der Steckdose 60 des Traktors 16 reversibel verbinden. Zwischen dem Traktor 16 und dem Überladewagen 10 ist daher keine mechanische Drehmomentübertragung zwischen einer Zapfwelle des Traktors 16 und dem Entladeförderer 14 erforderlich. Obwohl der Umrichter 50 in diesem Ausführungsbeispiel am Traktor 16 angeordnet ist, wäre es auch denkbar, den Umrichter 50 am Überladewagen 10 anzuordnen.

Besonders bevorzugt wird der elektrische Antrieb 36 derart angesteuert bzw. geregelt, dass bei der Erzeugung der elektrischen Energie und beim Betreiben des elektrischen Antriebs 36 ein maximierter Wirkungsgrad des Gespanns bestehend aus Überladewagen 10 und Traktor 16 erzielbar ist.

Abschließend sei ganz besonders darauf hingewiesen, dass das voranstehend erörterte Ausführungsbeispiel lediglich zur Beschreibung der beanspruchten Lehre dienen, diese jedoch nicht auf das Ausführungsbeispiel einschränkt.

## Patentansprüche

1. Von einem Fahrzeug gezogener Überladewagen (10) mit einem Behälter (12) und einem Entladeförderer (14), wobei der Behälter (12) zur Aufnahme von Schüttgut dient und wobei der Entladeförderer (14) zum Entladen des in dem Behälter (12) befindlichen Schüttguts dient, **dadurch gekennzeichnet, dass** dem Entladeförderer (14) ein elektrischer Antrieb (36) zugeordnet ist, durch welchen der Entladeförderer (14) ausschließlich angetrieben wird.

2. Überladewagen nach Anspruch 1, **dadurch gekennzeichnet, dass** der Entladeförderer (14) ein Förderrohr (30) und eine Förderschnecke (32) aufweist.

3. Überladewagen nach Anspruch 1 oder 2, **dadurch gekennzeichnet, dass** der elektrische Antrieb (36) einen Asynchronmotor oder einen Synchronmotor aufweist.

4. Überladewagen nach Anspruch 3, **dadurch gekennzeichnet, dass** der elektrische Antrieb (36) stufenlos betreibbar ausgebildet ist.

5. Überladewagen nach einem der vorhergehenden Ansprüche, **dadurch gekennzeichnet, dass** der Entladeförderer (14) - beispielsweise zu Reinigungszwecken - reversierbar betreibbar ist.

6. Überladewagen nach einem der vorhergehenden Ansprüche, **dadurch gekennzeichnet, dass** eine Messeinrichtung (50) zum Messen des von dem elektrischen Antrieb (36) verbrauchten elektrischen Stroms vorgesehen ist und dass auf Grund der gemessenen Stromstärke das Drehmoment ermittelbar ist, mit welchem der Entladeförderer (14) aktuell angetrieben wird.

7. Überladewagen nach einem der vorhergehenden Ansprüche, **dadurch gekennzeichnet, dass** der elektrische Antrieb (36) derart ansteuerbar und/oder regelbar ist, dass ein maximierter Entladedurchsatz erzielbar ist.

8. Überladewagen nach einem der vorhergehenden Ansprüche, **dadurch gekennzeichnet, dass** der elektrische Antrieb (36) derart ansteuerbar und/oder regelbar ist, dass bei der Erzeugung der elektrischen Energie und beim Betreiben des elektrischen Antriebs (36) ein maximierter Wirkungsgrad erzielbar ist.

9. Überladewagen nach einem der vorhergehenden Ansprüche, **dadurch gekennzeichnet, dass** der elektrische Antrieb (36) einen Elektromotor mit nachgeordnetem Getriebe (38), insbesondere Planetengetriebe oder Untersetzungsgetriebe, enthält.

10. Überladewagen nach einem der vorhergehenden Ansprüche, **dadurch gekennzeichnet, dass** wenigstens ein Frequenzumrichter (46, 50) vorgesehen ist.

11. Überladewagen nach einem der vorhergehenden Ansprüche, **gekennzeichnet durch** wenigstens eine Gleichrichtereinheit und/oder eine Wechselrichtereinheit.
